# FASCICULE DE BREVET EUROPEEN

(11) **EP 2 640 626 B1**
(45) Date de publication et mention de la délivrance du brevet: **17.09.2014**
(21) Numéro de dépôt: 11794546.9
(22) Date de dépôt: 10.11.2011
(51) Int. Cl.: B62D 13/02

(54) **DISPOSITIF DE COMMANDE ROTATIVE D'UN ESSIEU DIRECTEUR DE REMORQUE**
DREHSTEUERUNGSVORRICHTUNG FÜR EINE GELENKTE ACHSE EINES ANHÄNGERS
ROTARY CONTROL DEVICE FOR A TRAILER STEERED AXLE

(30) Priorité: 19.11.2010 FR 1059532
(43) Date de publication de la demande: 25.09.2013
(73) Titulaire: Envision Vehicle Engineering Novasio Technology Event, 70400 Hericourt (FR)
(72) Inventeur: HECKY, Stéphane, F-90300 Eloie (FR); ANDRECK, Gilles, F-25400 Audincourt (FR)
(74) Mandataire: Rhein, Alain
(86) Numéro de dépôt international: PCT/FR2011/052619
(87) Numéro de publication internationale: WO 2012/066219

(56) Documents cités:
- EP-A1- 1 932 747
- WO-A1-2004/101347
- CH-A- 400 789
- DE-U1- 20 308 964
- FR-A1- 2 753 161
- US-A- 2 907 576
- US-B1- 6 796 572

## Description

### Domaine de l'invention

La présente invention concerne un dispositif de commande rotative de l'essieu directeur d'une remorque.

Un tel dispositif est particulièrement adapté à des remorques d'un convoi comprenant un véhicule tracteur et plusieurs remorques ; la première remorque est généralement une semi-remorque, et est attachée de manière articulée au véhicule tracteur ; les remorques suivantes sont attachées chacune de manière articulée à la remorque qui la précède. Dans ce qui suit, quand il est dit qu'une remorque ou une de ses parties est attachée à la remorque précédente, les mots « remorque précédente» doivent être compris comme pouvant être la remorque précédente dans le convoi, ou de manière équivalente la semi-remorque attachée au véhicule tracteur du convoi, ou même le véhicule tracteur lui-même.

L'invention concerne les remorques à au moins deux essieux, un essieu directeur mobile en rotation autour d'un axe directeur vertical, et qui par sa rotation permet de diriger la remorque, et au moins un autre essieu, situé normalement plus à l'arrière de la remorque que l'essieu directeur, et que nous appellerons « essieu arrière » dans la suite du texte.

L'invention se situe plus généralement dans le domaine du guidage de convois MTS (Multi Trailor System), consistant en le guidage de chacune de ses remorques.

### Etat de la technique

Le guidage d'une remorque est effectué dans l'état de la technique par un timon mécanique solidaire de l'essieu directeur d'une remorque, et attaché à l'arrière de la remorque précédente par une attache articulée libre en rotation autour d'un axe sensiblement vertical. Un tel timon constitue un moyen d'articulation, et en même temps un moyen de commande d'orientation des essieux directeurs.

Le document FR2780377A1 présente une telle solution de guidage d'un convoi.

Lorsque le timon est solidaire de l'essieu directeur de la remorque, il inscrit celle-ci en virage généralement sur un rayon plus petit que celui de la remorque précédente, et de manière d'autant plus important que l'essieu directeur de la remorque est loin derrière le point d'attache.

L'essieu directeur doit donc être placé sous la remorque le plus près possible de son extrémité du côté du véhicule tracteur. Or on souhaite parfois reculer ledit essieu, pour assurer une meilleure répartition des contraintes induites par des charges lourdes.

Par ailleurs, la liaison étant articulée, elle ne permet pas la marche arrière si ce n'est sur une très petite distance et à condition que le convoi soit rectiligne.

US 2 907 576, US 6 796 572 divulguent les caractéristiques du préambule des revendications 1 et 10.

### Exposé de l'invention

La présente invention cherche à résoudre ces divers inconvénients, et propose un dispositif de commande rotative d'un essieu directeur d'une remorque, ledit essieu directeur étant mobile en rotation autour d'un axe directeur sensiblement vertical, ladite remorque étant destinée à être attachée de manière articulée à une remorque précédente, ou directement à un véhicule tracteur.

Le dispositif selon l'invention est particulier en ce qu'il comprend un moyen articulé, fixé par une de ses extrémités de manière articulée autour d'un axe sensiblement vertical à ladite remorque précédente, et fixé par son autre extrémité à un moyen de commande en rotation de l'essieu directeur. Ledit moyen de commande est mobile en rotation autour d'un axe de commande sensiblement vertical. Le dispositif comporte en plus un moyen de rétroaction de l'essieu directeur sur le moyen de commande en rotation.

Ainsi l'essieu directeur peut être positionné sous la remorque de manière optimale pour la répartition des contraintes induites par de lourdes charges, sans aucune contrainte de position liée à la fonction de guidage du convoi. En effet la fonction de guidage est assurée par le moyen de commande et le moyen de rétroaction.

Selon un mode préféré de réalisation de l'invention, ledit moyen articulé est une biellette.

Un tel mode de réalisation permet de supprimer le timon directeur, et de le remplacer par une biellette.

Selon un mode préféré de réalisation de l'invention, ledit moyen de commande en rotation est un tiroir de distribution d'un distributeur rotatif, lequel distributeur alimente des actionneurs hydrauliques et/ou pneumatiques de direction dudit essieu directeur.

Une telle solution permet un mode de réalisation simple et léger, d'autant plus que souvent une centrale hydraulique est de toute façon présente pour la commande en rotation de l'essieu arrière de la remorque.

Un tel distributeur rotatif peut être disposé solidaire de l'essieu directeur, cette solidarité assurant ledit moyen de rétroaction mécanique.

Selon un mode préféré de réalisation de l'invention, ledit moyen de rétroaction est un moyen capable de produire une loi cinématique prédéterminée entre le moyen de commande en rotation et l'essieu directeur. Ce peut être par exemple un ensemble pignons, ou pignons et chaîne, reliant l'essieu directeur au corps du distributeur rotatif ou à la partie fixe dudit moyen de commande en rotation.

Selon un mode préféré de réalisation de l'invention, ledit axe de commande est décalé par rapport à l'axe directeur et ledit moyen de rétroaction est une tringle reliant l'essieu directeur au corps du distributeur rotatif, ladite tringle étant disposée de telle sorte qu'elle produit une rotation dudit corps par rapport au châssis de la remorque permettant ainsi, en fonction des points d'attache, de sélectionner une loi cinématique prédéterminée entre le moyen de commande en rotation et l'essieu directeur.

Ce mode de réalisation permet de sélectionner une loi cinématique entre attelage et essieu directeur, de sorte que pour un angle donné de rotation de la biellette, l'essieu directeur est tourné d'un angle inférieur ou supérieur, selon les positions relatives et formes de la tringle et du distributeur rotatif.

On peut ainsi optimiser la conception géométrique de la remorque, et disposer le distributeur rotatif en un point favorable pour la facilité de construction de la remorque, sans être contraint par la cinématique recherchée.

L'invention concerne également une remorque comprenant un dispositif de commande rotative tel que décrit ci-dessus.

Selon un mode préféré de réalisation de l'invention, ladite remorque comprend en plus un circuit de commande rotatif des essieux permettant un pilotage individuel de chacun d'eux. Un tel circuit de commande permet de piloter une marche arrière à vitesse réduite, ce qui donne une souplesse bien supérieure pour le positionnement du convoi sur un quai de chargement de bateaux par exemple.

L'invention concerne enfin un procédé de commande rotative d'un essieu directeur d'une remorque attachée de manière articulée à une remorque précédente. Le procédé est particulier en ce qu'il comprend les étapes suivantes :
- mise en rotation d'un moyen articulé, fixé par une de ses extrémités de manière articulée à la remorque précédente
- détection du mouvement de rotation dudit moyen articulé par un moyen de commande en rotation,
- mise en rotation de l'essieu directeur, selon les informations transmises par ledit moyen de commande en rotation,
- rétroaction de l'essieu directeur sur le moyen de commande en rotation permettant d'interrompre la rotation de l'essieu directeur dans une position donnée.

### Brève description des dessins

D'autres avantages de l'invention apparaîtront à la lecture de la description d'un exemple de réalisation et des dessins annexés, dans lesquels :
- La figure 1 représente en vue de dessus une remorque avec un dispositif de commande rotative selon l'état de la technique,
- La figure 2 représente en vue de dessus une remorque avec un dispositif de commande rotative selon l'invention,
- La figure 3 représente une vue détaillée d'un dispositif de commande rotative selon l'invention dans trois positions successives 3a, 3b et 3c,
- La figure 4 représente une vue en perspective d'un élément essentiel du dispositif de la figure 3.

### Description détaillée d'un mode de réalisation de l'invention

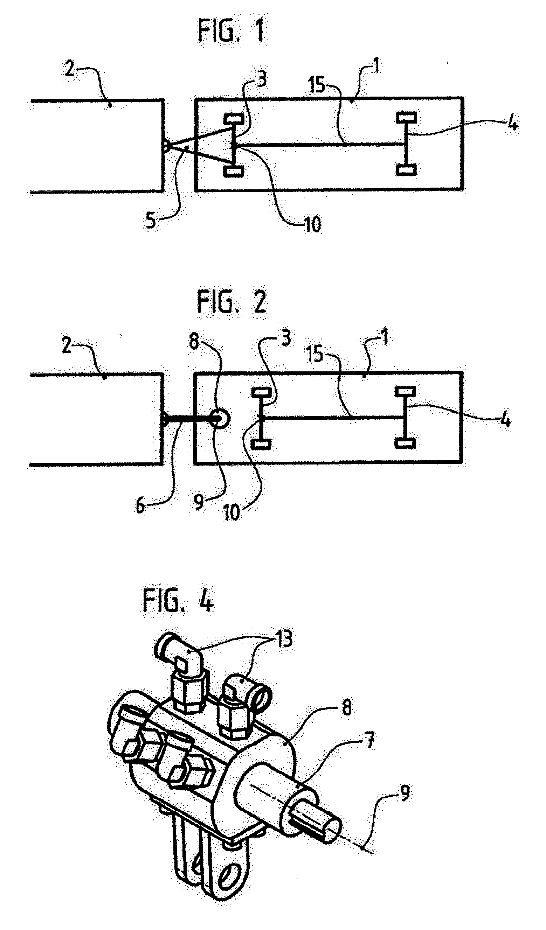

En référence à la figure 1, une remorque 1 selon l'état de la technique comprend un essieu directeur 3 et au moins un essieu arrière 4. L'essieu directeur 3 est relié à la remorque précédente ou au véhicule tracteur 2 par l'intermédiaire d'un timon 5, qui oriente l'essieu directeur selon la position et l'orientation de la remorque précédente 2 et la distance de la remorque précédente 2 à l'essieu directeur 3. On comprend que quand on positionne cet essieu directeur 3 loin en arrière, par exemple dans une position optimale pour la répartition des contraintes induites par des charges lourdes dans la remorque 1, le guidage en est influencé d'une manière qui n'est pas forcément optimale.

En référence à la figure 2, une remorque 1 selon l'invention comprend un essieu directeur 3 et au moins un essieu arrière 4. Une biellette 6 relie la remorque précédente 2 à un distributeur rotatif 8, positionné déporté par rapport à l'essieu directeur 3, en général plus près de l'extrémité avant de la remorque 1 que ledit essieu directeur 3.

Lorsque le convoi prend un virage, la remorque précédente 2 donne un angle α à la biellette 6 par rapport à l'axe longitudinal de la remorque 1, ce qui produit une rotation du tiroir de distribution 7 du distributeur rotatif 8 autour de l'axe de commande 9.

Une telle rotation du tiroir de distribution 7 par rapport au corps du distributeur 8 a pour effet d'autoriser un écoulement d'huile en direction de l'actionneur de rotation 11 et/ou 12 de l'essieu directeur 3, et produit donc une rotation dudit essieu autour de l'axe directeur 10, dans un sens déterminé par le sens de rotation du tiroir de distribution 7.

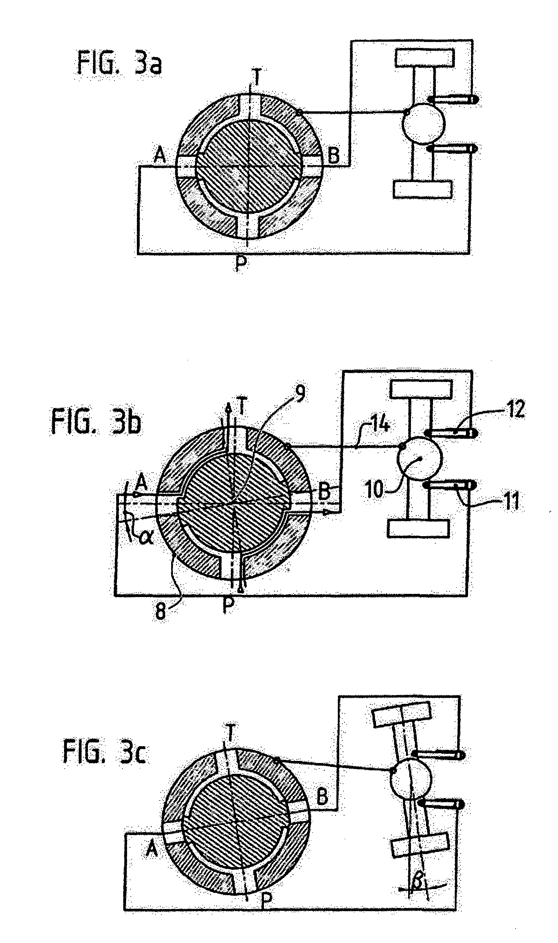

En référence à la figure 3, le corps de ce distributeur 8 est mobile en rotation par rapport au châssis 15 de la remorque 1 autour de l'axe de commande 9. Dans le cadre de la présente demande, le terme châssis désigne une partie de la remorque 1 qui est fixe par rapport à ladite remorque 1, par opposition aux parties mobiles, tels que les essieux 3, 4, la biellette 6, le distributeur 8 et son tiroir 7 ou la tringle 14. L'entraînement en rotation du corps du distributeur 8 est obtenu par une tringle 14 reliée à l'essieu directeur 3.

La situation du convoi rectiligne 1, 2 est représentée à la figure 3a. Le distributeur 8 a ses sorties A, B vers les actionneurs 11, 12 obturés, les actionneurs de direction 11, 12 sont à leur position de référence, et l'essieu directeur 3 également. A la figure 3b est illustrée la situation où la biellette 6, par la rotation de la remorque précédente 1, est tournée d'un angle α par rapport à sa position de référence. Les sorties A, B du distributeur 8 sont libérées, de sorte que la pression P peut s'exercer en B, et l'huile de retour en A peut s'écouler en T. On comprendra que si la biellette 6 avait tourné dans l'autre sens, c'est le point A qui aurait reçu la pression venu de P, et le point B qui aurait été mis en relation avec le point de retour T.

Une pression d'huile va s'exercer sur l'actionneur droit 12 par la pression d'huile venant de B, ce qui fera tourner l'essieu directeur 3. La figure 3c illustre que lorsque la rotation de l'essieu directeur 3 a atteint un angle β, par le moyen de la tringle 14, le corps du distributeur 8 a atteint l'angle α, ce qui referme les sorties A, B du distributeur 8 et immobilise l'essieu directeur 3 dans cette position.

En réalité ces trois situations successives sont quasi-instantanées, et la rotation du tiroir 7 d'un angle α est instantanément accompagné d'une rotation de l'essieu directeur 3 d'un angle β. Par le choix des points d'attache de la tringle 14 sur l'essieu directeur 3 et le corps du distributeur 8, on peut sélectionner le rapport entre les angles β et α, autrement dit la loi cinématique entre l'essieu directeur 3 et le distributeur 8. Selon ce qu'on aura prédéterminé comme étant favorable, par exemple à une trajectoire mono-ligne du convoi formé d'un élément tracteur et de plusieurs remorques 1, 2 selon l'invention, on pourra sélectionner une loi cinématique avec β inférieur ou supérieur à α.

Le passage de l'huile dans le distributeur 8 est représenté schématiquement par une ligne. Dans la réalité les ouvertures dans le distributeur sont réalisées par des tuyaux 13 de sortie du distributeur 8 et des usinages non représentés dans le cylindre formant le tiroir du distributeur 7 (voir figure 4).

Un circuit hydraulique complémentaire non représenté permet, par un pilotage individualisé, un guidage spécifique des essieux directeur 3 et arrière 4, pour effectuer une marche arrière du convoi. La liaison hydraulique entre le tiroir de distribution 7 du distributeur rotatif 8 avec l'essieu directeur 3 est alors désactivée, et un circuit hydraulique à pilotage individuel le remplace. D'autres circuits montés sur d'autres essieux deviennent actifs également, permettant à vitesse réduite d'ajuster la rotation de chaque essieu 3, 4 pour une marche arrière satisfaisante du convoi 1, 2.

Les signes de référence insérés après les caractéristiques techniques mentionnées dans les revendications ont pour seul but de faciliter la compréhension de ces dernières et n'en limitent aucunement la portée.

## Revendications

1. Dispositif de commande rotative d'un essieu directeur (3) d'une remorque (1), ledit essieu directeur (3) étant mobile en rotation autour d'un axe directeur (10) sensiblement vertical, ladite remorque (1) comprenant un châssis (15), et étant destinée à être attachée de manière articulée à une remorque précédente (2), ledit dispositif comprenant encore un moyen articulé (6), fixé de manière articulée autour d'un axe sensiblement vertical par une de ses extrémités à ladite remorque précédente (2), et fixé par son autre extrémité à un moyen hydraulique et/ou pneumatique de commande en rotation (7) de l'essieu directeur (3), lequel moyen (7) est mobile en rotation autour d'un axe de commande (9) sensiblement vertical, **caractérisé en ce qu'**il comporte un moyen de rétroaction mécanique de l'essieu directeur (3) sur le moyen de commande en rotation (7).

2. Dispositif selon la revendication précédente, dans lequel ledit moyen articulé (6) est une biellette

3. Dispositif selon l'une des revendications précédentes, dans lequel ledit moyen de commande en rotation (7) est un tiroir de distribution (7) d'un distributeur rotatif (8), lequel distributeur alimente des actionneurs hydrauliques et/ou pneumatiques de direction (11, 12) dudit essieu directeur (3).

4. Dispositif selon l'une des revendications précédentes, dans lequel ledit moyen de rétroaction est un moyen capable de produire une loi cinématique prédéterminée entre le moyen de commande en rotation (7) et l'essieu directeur (3).

5. Dispositif selon la revendication précédente, dans lequel ledit axe de commande (9) est décalé par rapport à l'axe directeur (10) et ledit moyen de rétroaction est une tringle (14) reliant l'essieu directeur (3) au corps du distributeur rotatif (8), ladite tringle (14) étant disposée de telle sorte qu'elle produit une rotation dudit corps (8) par rapport au châssis (15) de la remorque (1) permettant ainsi, en fonction des points d'attache, de sélectionner une loi cinématique prédéterminée entre le moyen de commande en rotation (7) et l'essieu directeur (3).

6. Dispositif selon l'une des revendications 4 ou 5, dans lequel l'angle de rotation de l'essieu directeur (3) est inférieur à l'angle de rotation dudit tiroir de distribution (7).

7. Dispositif selon l'une des revendications 4 ou 5, dans lequel l'angle de rotation de l'essieu directeur (3) est supérieur à l'angle de rotation dudit tiroir de distribution (7).

8. Remorque comprenant un dispositif de commande rotative selon l'une des revendications précédentes.

9. Remorque selon la revendication précédente, comprenant en plus un circuit de commande rotative des essieux (3, 4) à pilotage individuel de chaque essieu.

10. Procédé de commande rotative d'un essieu directeur (3) d'une remorque (1) comprenant un châssis (15) et attachée de manière articulée à une remorque précédente (2), **caractérisé en ce qu'**il comprend les étapes suivantes :
- mise en rotation d'un moyen articulé (6), fixé par une de ses extrémités de manière articulée à la remorque précédente (2) ;
- mise en rotation d'un moyen de commande en rotation (7), de préférence un tiroir de distribution (7) d'un distributeur rotatif (8), produit par le mouvement de rotation dudit moyen articulé (6) ;
- mise en rotation de l'essieu directeur (3), selon les informations et/ou ordres transmis par ledit moyen de commande en rotation (7) ;
- rétroaction de l'essieu directeur (3) sur le moyen de commande en rotation (7) permettant d'interrompre la rotation de l'essieu directeur (3) dans une position donnée.

## Patentansprüche

1. Drehsteuerungsvorrichtung für eine gelenkte Achse (3) eines Anhängers (1), wobei die gelenkte Achse (3) drehbeweglich um eine im wesentlichen vertikale Lenkachse (10) ist, wobei der Anhänger (1) ein Fahrgestell (15) umfasst und dazu bestimmt ist, gelenkig an einen vorhergehenden Anhänger (2) gekoppelt zu werden, wobei die Vorrichtung ein gelenktes Mittel (6) umfasst, das mit einem seiner Enden gelenkig um eine im wesentlichen vertikale Achse an dem vorangehenden Anhänger (2) befestigt ist, und mit seinem anderen Ende an einem hydraulischen und/oder pneumatischen Mittel zur Steuerung in Drehung (7) der gelenkten Achse (3) befestigt ist, welches Mittel (7) drehbeweglich um eine im wesentlichen vertikale Steuerachse (9) ist, **dadurch gekennzeichnet, dass** sie ein Mittel zur mechanischen Rückwirkung der gelenkten Achse (3) auf die Drehsteuerungsvorrichtung (7) umfasst.

2. Vorrichtung nach dem vorhergehenden Anspruch, bei der das gelenkte Mittel (6) eine Verbindungsstange ist.

3. Vorrichtung nach einem der vorhergehenden Ansprüche, bei der das besagte Drehsteuerungsvorrichtung (7) einen Steuerschieber (7) eines Drehverteilers (8) ist, wobei dieser Verteiler hydraulische und/oder pneumatische Lenkaktuatoren (11, 12) der besagten gelenkten Achse (3) mit Strom versorgt.

4. Vorrichtung nach einem der vorhergehenden Ansprüche, bei der das Rückwirkungsmittel ein Mittel ist, das geeignet ist, ein vorbestimmtes Bewegungsgesetz zwischen der Drehsteuerungsvorrichtung (7) und der gelenkten Achse (3) zu erzeugen.

5. Vorrichtung nach dem vorhergehenden Anspruch, bei der die Steuerachse (9) bezüglich der Lenkachse (10) versetzt ist und das Rückwirkungsmittel eine Verbindungsstange (14) ist, die die gelenkte Achse (3) mit dem Körper des Drehverteilers (8) verbindet, wobei die besagte Verbindungsstange (14) so angeordnet ist, dass sie eine Drehung des Körpers (8) bezüglich des Fahrgestells (15) des Anhängers (1) erzeugt, die es also erlaubt, abhängig von den Kopplungsstellen ein vorbestimmtes Bewegungsgesetz zwischen der Drehsteuerungsvorrichtung (7) und der gelenkten Achse (3) zu wählen.

6. Vorrichtung nach einem der Ansprüche 4 oder 5, bei der der Drehwinkel der gelenkten Achse (3) kleiner ist als der Drehwinkel des genannten Steuerschiebers (7).

7. Vorrichtung nach einem der Ansprüche 4 oder 5, bei der der Drehwinkel der gelenkten Achse (3) größer ist als der Drehwinkel des genannten Steuerschiebers (7).

8. Anhänger, umfassend eine Drehsteuerungsvorrichtung nach einem der vorhergehenden Ansprüche.

9. Anhänger nach dem vorhergehenden Anspruch, umfassend außerdem eine Drehsteuerungsschaltung für die Achsen (3, 4) mit Einzelantrieb jeder Achse.

10. Verfahren zur Drehsteuerung einer gelenkten Achse (3) eines Anhängers (1), der ein Fahrgestell (15) umfasst und gelenkig an einem vorhergehenden Anhänger (2) gekoppelt ist, **dadurch gekennzeichnet, dass** es die nachstehenden Schritte umfasst
- Indrehungsetzen eines gelenkten Mittels (6), das mit einem seiner Enden gelenkig am vorhergehenden Anhänger (2) befestigt ist ;
- Indrehungsetzen einer Drehsteuerungsvorrichtung, vorzugsweise eines Steuerschiebers (7) eines Drehverteilers (8) das durch die Drehbewegung des besagten gelenkten Mittels (6) erzeugt wird ;
- Indrehungsetzen der gelenkten Achse (3) entsprechend der von der besagten Drehsteuerungsvorrichtung (7) übertragenen Informationen und/oder Befehle ;
- Rückwirkung der gelenkten Achse (3) auf die Drehsteuerungsvorrichtung (7), die es erlaubt, die Drehung der gelenkten Achse (3) in einer gegebenen Position zu unterbrechen.

## Claims

1. Device for controlling in rotation the steering axle (3) of a trailer (1), said steering axle (3) being movable in rotation about a substantially vertical steering (10), said trailer (1) comprising a chassis (15), and being aimed at being coupled in a hinging way to a preceding trailer (2), said device comprising also a hinging means (6), fixed in a hinging way about a substantially vertical axis, at one of its ends, to said preceding trailer (2), and fixed, at its other end, to a hydraulic and/or pneumatic means for controlling in rotation (7) the steering axle (3), which means (7) is movable in rotation about a substantially vertical control axis (9), **characterized in that** it includes a mechanical means for retroaction from the steering axle (3) onto the means for controlling in rotation (7).

2. Device according to the preceding claim, wherein said hinging means (6) is a rod.

3. Device according to one of the preceding claims, wherein said means for controlling in rotation (7) is a slide valve (7) of a rotary feeder (8), which feeder supplies hydraulic and/or pneumatic direction actuators (11, 12) of said steering axle (3).

4. Device according to one of the preceding claims, wherein said retroaction means is a means capable of producing a predetermined kinematic law between the means for controlling in rotation (7) and the steering axle (3).

5. Device according to the preceding claim, wherein said control axis (9) is offset with respect to the steering axis (10) and said retroaction means is a connecting rod (14) connecting the steering axle (3) to the body of the rotary feeder (8), said connecting rod (14) being so arranged that it produces a rotation of said body (8) with respect to the chassis (15) of the trailer (1) thus permitting, depending on the coupling points, to select a predetermined kinematic law between the means for controlling in rotation (7) and the steering axle (3).

6. Device according to one of claims 4 or 5, wherein the angle of rotation of the steering axle (3) is smaller than the angle of rotation of said slide valve (7).

7. Device according to one of claims 4 or 5, wherein the angle of rotation of the steering axle (3) is larger than the angle de rotation of said slide valve (7).

8. Trailer comprising a device for controlling in rotation according to one of the preceding claims.

9. Trailer according to the preceding claim, comprising in addition a circuit for controlling in rotation the axles (3, 4) with individual driving of each axle.

10. Method for controlling in rotation a steering axle (3) of a trailer (1) comprising a chassis (15) and coupled in a hinging way to a preceding trailer (2), **characterised in that** it comprises the following steps
- putting into rotation a hinging means (6) fixed at one of its ends in a hinging way to the preceding trailer (2)
- putting into rotation a means for controlling in rotation, preferably a slide valve (7) of a rotary feeder (8)produced by the rotary motion of said hinging means (6)
- putting into rotation the steering axle (3), according to the information and/or orders transmitted by said means for controlling in rotation,
- retroaction from the steering axle (3) onto the means for controlling in rotation (7) permitting to interrupt the rotation of the steering axle (3) in a given position.
